# EUROPÄISCHE PATENTSCHRIFT

(11) **EP 3 823 785 B1**
(45) Veröffentlichungstag und Bekanntmachung des Hinweises auf die Patenterteilung: **05.07.2023**
(21) Anmeldenummer: 19740388.4
(22) Anmeldetag: 18.07.2019
(51) Int. Cl.: B23K 1/00, B23K 1/002, B23K 1/20, B23K 3/047, B23K 3/08, H05B 6/40, B23K 101/36

(54) **VERFAHREN ZUM INDUKTIVEN VERLÖTEN MINDESTENS EINES FERROMAGNETISCHEN KONTAKTELEMENTS MIT MINDESTENS EINER LEITERSTRUKTUR AUF EINER NICHTMETALLISCHEN SCHEIBE**
PROCESS OF INDUCTIVE SOLDERING OF AT LEAST ONE FERROMAGNETIC CONTACT ELEMENT TO AT LEAST ONE CONDUCTOR STRUCTURE ON A NON-METALLIC DISC
PROCÉDÉ DE BRASAGE INDUCTIF D'AU MOINS UN ÉLÉMENT DE CONTACT FERROMAGNÉTIQUE À AU MOINS UNE STRUCTURE CONDUCTRICE SUR UN DISQUE NON MÉTALLIQUE

(30) Priorität: 20.07.2018 EP 18184599
(43) Veröffentlichungstag der Anmeldung: 26.05.2021
(73) Patentinhaber: SAINT-GOBAIN GLASS FRANCE, 92400 Courbevoie (FR)
(72) Erfinder: REUL, Bernhard, 52134 Herzogenrath (DE); HALM, Cynthia, 52074 Aachen (DE)
(74) Vertreter: Gebauer, Dieter Edmund
(86) Internationale Anmeldenummer: PCT/EP2019/069388
(87) Internationale Veröffentlichungsnummer: WO 2020/016364

(56) Entgegenhaltungen:
- CN-U- 203 936 495
- DE-B3-102004 057 630
- JP-A- H05 261 526
- JP-A- 2014 232 615
- US-A- 4 197 441
- US-A- 4 415 116
- US-A1- 2016 286 611

## Beschreibung

Die Erfindung betrifft ein Verfahren zum induktiven Löten.

Moderne Automobil- oder Bauverglasungen verfügen oftmals über eine Vielzahl von elektrischen Funktionen, wie Antennen, elektrische Heizungen oder elektrische Leuchtelemente. Diese werden in der Regel durch Leiterstrukturen mit Lötanschlussflächen auf der Scheibenoberfläche kontaktiert. Die Leiterstrukturen bestehen dabei meist aus einer wohlbekannten eingebrannten Dickschicht aus einer Siebdruckpaste mit relativ hohem Silberanteil. Anschließend werden Kontaktelemente über ein Lot mit den Leiterstrukturen verlötet. Das Lot bildet dabei einen elektrischen Anschluss und oftmals auch eine mechanische Verbindung zwischen den Leiterstrukturen und den Zuleitungen, die mit dem Kontaktelement verbunden sind.

Der Lötvorgang kann beispielsweise durch ein Kontaktlötverfahren erfolgen, bei dem zwei Elektroden mit einem gewissen Abstand voneinander auf das elektrisch leitfähige Kontaktelement aufgesetzt werden. Anschließend wird das Kontaktelement durch einen elektrischen Strom, der von einer Elektrode zur anderen fließt, mittels ohmscher Widerstandsheizung erwärmt.

Alternativ kann der Lötvorgang durch Induktionslöten erfolgen. Dabei wird beispielsweise ein Magnetfeld durch eine Spule, die sich auf der der Leiterstruktur abgewandten Oberfläche der Scheibe befindet, ein hochfrequentes Magnetfeld in die Leiterstruktur, das Lot und das Kontaktelement eingekoppelt. Dazu nutzt man das Vermögen des Magnetfelds, die zum Aufschmelzen des Lotes benötigte Energie kontaktlos durch die Scheibe hindurch zu übertragen. Ein derartiges Verfahren ist beispielsweise aus der DE 10 2004 057 630 B3 (Anfangspunkt dieser Erfindung) bekannt.

Weitere Verfahren zum Erwärmen oder Löten mittels Induktion sind beispielsweise aus der CN 203 936 495 U, der JP H05 261526 A, der JP 2014 232615 A, der US 4 197 441 A oder der US 4 415 116 A bekannt, wobei ein Endbereich der Induktionsschleife nicht als Lötspitze dient. US 20160286611 A1 zeigt ein Verfahren, bei dem ein Lötdraht durch eine L-förmig gebogene Lötschleife aufgeschmolzen wird.

Der vorliegenden Erfindung liegt nunmehr die Aufgabe zu Grunde, ein verbessertes Verfahren zum induktiven Löten anzugeben.

Diese Aufgabe wird durch ein erfindungsgemäßes Verfahren mit den Merkmalen des Patentanspruchs 1 gelöst. Die Merkmale der nachgeordneten Unteransprüche geben vorteilhafte Weiterbildungen der Erfindung an.

Das im erfindungsgemäßen Verfahren eingesetzte Lötwerkzeug zum induktiven Löten umfasst zumindest:
- eine Induktionsschleife und
- einen Induktionsgenerator, der mit der Induktionsschleife elektrisch leitend verbunden ist,
wobei die Induktionsschleife
- aus einem Metallprofil, bevorzugt aus einem metallenen Vollprofil oder aus einem metallenen Hohlprofil, besteht,
- mindestens einen U-förmigen Bereich oder zwei U-förmige Bereiche aufweist, und jeder U-förmige Bereich jeweils zwei Schenkeln und einen die Schenkel verbindenden Endbereich aufweist,
- der mindestens eine U-förmige Bereich eine Länge L von mindestens 3 mm, bevorzugt von 3 mm bis 500 mm, und eine Breite (Schenkelabstand) B von 2 mm bis 30 mm, bevorzugt von 4 mm bis 25 mm aufweist.

Der Endbereich wird im Folgenden auch als Umkehrbereich bezeichnet, da sich dort die Erstreckungsrichtung des ersten Schenkels in eine gegenläufige Erstreckungsrichtung des zweiten Schenkels umkehrt. Dieser End- oder Umkehrbereich dient als Lötspitze der Schleife. D.h. der End- oder Umkehrbereich ist einer zu verlötenden Lötstelle beziehungsweise einem zu verlötenden Kontaktelement an nächsten liegend angeordnet. Von dort wird das Induktionsfeld in die Lötstelle beziehungsweise in das Kontaktelement eingekoppelt. Der End- oder Umkehrbereich ist daher wesentlich für die Erwärmung der Lötstelle und dient somit als Energiequelle zu deren Erwärmung.

Die Induktionsschleife weist keine vollständige Spulenwindung auf oder mit anderen Worten, die Induktionsschleife ist eine nicht lokal geschlossene Windung. Nicht lokal geschlossen bedeutet, dass die von der Induktionsschleife umschlossene Fläche in der Projektion bezüglich der Flächennormalen der umschlossenen Fläche nicht geschlossen umrandet ist. Dadurch unterscheidet sich die Induktionsschleife zusätzlich von Induktionsspulen nach dem Stand der Technik. Solche Induktionsschleifen sind besonders kompakt und einfach herzustellen und universell für eine Vielzahl gängiger Anschlusselemente einsetzbar.

Die Induktionsschleife besteht aus einem Metallprofil. Das Metallprofil besteht aus mindestens einem Metall, bevorzug aus Kupfer oder versilbertem Kupfer, aus Aluminium oder metallischen Sintermaterialien. Metalle und insbesondere Kupfer oder Aluminium sind gute elektrische Leiter und sind daher besonders geeignet, das Wechselspannungssignal vom Induktionsgenerator in den Endbereich der Induktionsschleife zu führen und dort zum Erwärmen einer Lötstelle oder eines Kontaktelements auszukoppeln.

Das Metallprofil ist bevorzugt ein Vollprofil oder ein Hohlprofil. Vollprofil bedeutet hier, dass das Metallprofil vollständig gefüllt ist und insbesondere, außer etwaigen Poren, keine Hohlräume aufweist Der Querschnitt des Metallprofils ist prinzipiell beliebig. Das Metallprofil hat vorteilhafterweise einen runden, ovalen, elliptischen oder kreisförmigen Querschnitt und ist dann im Falle des Vollprofils ein Draht beziehungsweise im Falle des Hohlprofils ein Rohr oder Rundrohr. Alternativ kann das Metallprofil einen eckigen Querschnitt, beispielsweise einen rechteckigen oder quadratischen Querschnitt, aufweisen.

Die Induktionsschleife ist bevorzugt einstückig ausgebildet und wird beispielsweise aus einem Metallprofil durch Kalt- oder Warmbiegeverfahren geformt. Derartige Induktionsschleifen sind besonders einfach herzustellen. Das Hohlprofil ist bevorzugt in Erstreckungsrichtung nahtlos. Es kann aber auch geschweißt oder anderweitig verbunden sein.

Es versteht sich, dass die Induktionsschleife auch durch Aneinanderfügen und Verbinden mehrere Metallprofilabschnitte aus demselben oder unterschiedlichen Materialien hergestellt werden kann.

In einer vorteilhaften Ausgestaltung der Induktionsschleife weist das Hohlprofil einen Innendurchmesser Di von 0,3 mm bis 5 mm, bevorzugt von 0,5 mm bis 3 mm und insbesondere von 0,75 mm bis 1,25 mm auf. In einer weiteren vorteilhaften Ausgestaltung der Induktionsschleife weist das Hohlprofil einen Außendurchmesser Da von 0,75 mm bis 7,0 mm, bevorzugt von 1,0 mm bis 5,0 mm und insbesondere von 1,25 mm bis 2,5 mm auf.

In einer weiteren vorteilhaften Ausgestaltung weist die Induktionsschleife mindestens zwei Rohranschlüsse auf, die mit einem im Inneren der Induktionsschleife angeordneten Hohlraum verbunden sind und die zum Verbinden mit einer Kühleinheit geeignet sind, um ein Flüssigkühlmittel durch das Innere der Induktionsschleife zu pumpen. Das Flüssigkühlmittel enthält bevorzugt Kühlwasser und besonders bevorzugt im Wesentlichen Wasser oder Wasser/Glykol-Gemische, oder besteht daraus. Die Rohranschlüsse befinden vorteilhafterweise an den Enden der Schenkel, die nicht mit dem Endbereich verbunden sind.

Die Induktionsschleife ist dabei derart ausgestaltet, dass jeder Schenkel und der Endbereich und etwaige weitere Zuleitungen ein verbundenes Hohlprofil ausbilden. Das bedeutet, dass das Hohlprofil der Schenkel jeweils mit dem Hohlprofil des Endbereichs verbunden ist und einen gemeinsamen Hohlraum bilden. Der eine gemeinsame Hohlraum ist bis auf zwei Enden, die als Rohranschlüsse dienen, vollständig geschlossen. Dadurch kann ein Kühlmittel, beispielsweise Kühlwasser, über einen Rohranschluss in die Induktionsschleife eingeleitet werden und ohne Verluste die Induktionsschleife über den zweiten Rohranschluss verlassen. Bevorzugt wird das Kühlwasser in einem Kühlwasserkreislauf kontinuierlich gepumpt und in einer Kühleinheit gekühlt. Dies verhindert eine Überhitzung der Induktionsschleife.

Eine vorteilhafte Induktionsschleife weist genau einen U-förmigen Bereich auf. Diese Ausgestaltungsform ist besonders universell und flexibel einsetzbar und beispielsweise für alle gängigen Lötanschlüsse von Kontaktelementen zur Kontaktierung von Leiterstrukturen auf Glasscheiben geeignet.

Eine weitere vorteilhafte Induktionsschleife weist genau zwei U-förmige Bereiche auf, im Folgenden auch Doppel-U-förmig oder W-förmig genannt. Die beiden U-förmigen Bereiche können dabei in einer Ebene angeordnet werden. Alternativ können die beiden U-förmigen Bereiche auch parallel zueinander und bevorzugt parallel und deckungsgleich übereinander angeordnet werden. Alternativ können die beiden U-förmigen Bereiche auch einen Winkel, bevorzugt einen 90°-Winkel zueinander aufweisen. Diese Ausgestaltungsformen sind ebenfalls besonders universell und flexibel einsetzbar und beispielsweise für alle gängigen Lötanschlüsse von brückenförmigen Kontaktelementen zur Kontaktierung von Leiterstrukturen auf Glasscheiben geeignet, wobei zwei Lötanschlussflächen gleichzeitig verlötet werden können.

In der Induktionsschleife ist der Endbereich jedes U-förmigen Bereichs abgerundet und bevorzugt bogenförmig ausgebildet. Besonders vorteilhaft ist eine halbkreisförmige Ausgestaltung und insbesondere eine halbkreisförmige Ausgestaltung mit einem Radius R von 2 mm bis 20 mm. Der Endbereich jedes U-förmigen Bereichs ist hier bevorzugt konvex, also bezüglich der von den Schenkeln und dem Endbereich umrandeten Fläche nach außen gewölbt ausgestaltet. Diese Ausgestaltungsform ist besonders universell und flexibel einsetzbar und beispielsweise für alle gängigen Lötanschlüsse von Kontaktelementen zur Kontaktierung von Leiterstrukturen auf Glasscheiben geeignet.

In einer vorteilhaften Ausgestaltung der Induktionsschleife weist der Endbereich jedes U-förmigen Bereichs einen ersten bogenförmigen Abschnitt, einen geradlinigen Abschnitt und einen zweiten bogenförmigen Abschnitt auf. Bevorzugt weist der erste bogenförmige Abschnitt und der zweite bogenförmige Abschnitt einen Krümmungswinkel R1 von 0,5 mm bis 5 mm auf. Vorteilhafterweise weist der erste bogenförmige Abschnitt und zweite bogenförmige Abschnitt jeweils die Form eines Viertelkreises auf.

Der U-förmige Bereich hat eine Länge L von mindestens 3 mm, bevorzugt von mindestens 5 mm, bevorzugter von mindestens 10 mm, noch bevorzugter von mindestens 30 mm und insbesondere von mindestens 50 mm. Die Länge L bestimmt sich dabei aus der Länge der Schenkel samt dem Endbereich.

Der U-förmige Bereich hat vorteilhafterweise eine Länge L von maximal 500 mm, bevorzugt von maximal 300 mm, bevorzugter von maximal 50 mm, insbesondere von maximal 30 mm.

Ein alternativer U-förmiger Bereich hat eine Länge L von 3 mm bis 500 mm, bevorzugt von 3 mm bis 100 mm, bevorzugter von 3 mm bis 50 mm, noch bevorzugter von 5 mm bis 50 mm und insbesondere von 5 mm bis 30 mm.

Die Schenkel eines U-förmigen Bereichs verlaufen vorteilhafterweise im Wesentlichen parallel. Dies erlaubt eine besonders kompakte Bauform und einfache Herstellung der Induktionsschleife. Sie können auch leicht gekrümmt sein oder unter einem Winkel zueinander verlaufen, bevorzugt unter einem Winkel von kleiner oder gleich 90°, besonders bevorzugt von kleiner oder gleich 20° und insbesondere von kleiner oder gleich 10°.

Der U-förmige Bereich hat eine Breite B von 2 mm bis 30 mm, bevorzugt von 4 mm bis 25 mm. Die Breite B ergibt sich durch den maximalen Abstand der Mitten der Schenkel des U-förmigen Bereichs (im Folgenden auch Schenkelabstand genannt). Bei parallelen Schenkeln ist die Breite B über die gesamte Länge der Schenkel konstant.

Alternativ können auch ein oder beide Schenkel eines jeden U-förmigen Bereichs gekrümmt und bevorzugt konvex gekrümmt sein.

In einer vorteilhaften Ausgestaltung des Lötwerkszeugs weist die Induktionsschleife kein magnetisches und bevorzugt kein weichmagnetisches Material auf. Weichmagnetische Werkstoffe sind ferromagnetische Materialien und lassen sich in einem Magnetfeld leicht magnetisieren. insbesondere weist die Induktionsschleife in ihrem Wirkungsbereich kein weichmagnetisches oder ferromagnetisches Material auf, außer einem gegebenenfalls zu verlötenden weichmagnetischen Bauelement, wie einem weichmagnetischen Kontaktelement, weichmagnetischem Lot, weichmagnetischen Leiterstrukturen und/oder deren Zuleitung oder Zuleitungen. Der Wirkungsbereich ist hier der Bereich, in den das Induktionsfeld zum Verlöten abstrahlt, d.h. der Umgebungsbereich der Induktionsschleife, in dem ein zu lötendes Bauelement erwärmt werden kann. Es versteht sich, dass die zu verlötenden Bauelemente und Strukturen nicht Teil der erfindungsgemäßen Induktionsschleife sind.

In einer vorteilhaften Ausgestaltung weist das Lötwerkzeug eine Einhausung der Induktionsschleife auf, die zumindest abschnittsweise nichtmagnetisch und bevorzugt nicht-weichmagnetisch ist. Besonders bevorzugt besteht die Einhausung aus einem thermisch beständigen Kunststoff oder einer Keramik.

In einer weiteren vorteilhaften Ausgestaltung des Lötwerkzeugs ist eine Einhausung der Induktionsschleife als Gegenhalter zum Fixieren eines Kontaktelements beim Verlöten geeignet und dazu ausgebildet.

In einer weiteren vorteilhaften Ausgestaltung des Lötwerkzeugs weist der Induktionsgenerator eine einstellbare Frequenz von bis zu 1500 kHz, bevorzugt von 5 kHz bis 1100 kHz, besonders bevorzugt von 40 kHz bis 1100 kHz, noch bevorzugter von 400 kHz bis 1100 kHz und insbesondere von 700 kHz und 1100 kHz auf. Die einstellbare Ausgangsleistung des Induktionsgenerators beträgt vorteilhafterweise von 200 W bis 15 kW und bevorzugt von 400 W bis 3 kW.

Gezeigt, aber nicht beansprucht, ist eine Vorrichtung, die umfasst:
- Mittel zum Festlegen einer Scheibe während des Lötvorgangs,
- mindestens ein Lötwerkzeug mit mindestens einer zum Abstrahlen eines Magnetfeldes geeigneten Induktionsschleife,
- Mittel zum gegenseitigen Positionieren des Lötwerkzeugs und eines, bevorzugt weichmetallischen, Kontaktelements derart, dass das eingeschaltete Magnetfeld des Lötwerkzeugs das Kontaktelement und damit die Lötstelle, bevorzugt auf eine Temperatur über der Schmelztemperatur eines Lots, erhitzt.

Dazu wird vorteilhafterweise eine Wechselspannung mit einer Frequenz von bis zu 1500 kHz, bevorzugt von 5 kHz bis 1100 kHz, besonders bevorzugt von 40 kHz bis 1100 kHz, noch bevorzugter von 400 kHz bis 1100 kHz und insbesondere von 700 kHz und 1100 kHz, vom Induktionsgenerator erzeugt und in die Induktionsschleife eingeleitet.

Die Vorrichtung dient damit zum induktiven Verlöten mindestens eines, bevorzugt weichmagnetischen, Kontaktelements mit mindestens einer Leiterstruktur auf einer nichtmetallischen Scheibe.

In einer vorteilhaften Weiterbildung der Vorrichtung wird das Lot an der Lötstelle auf die Löttemperatur erhitzt, wobei die Löttemperatur eine Temperatur über der Schmelztemperatur des Lots ist, bei der das Lot eine Lötverbindung mit den angrenzenden Lötanschlussflächen eingehen kann oder eingeht.

In einer vorteilhaften Weiterbildung der Vorrichtung umfasst die Vorrichtung im Wirkungsbereich der Induktionsschleife keine Bauelemente zum Lenken und Führen der Feldlinien des Magnetfeldes und insbesondere keine weichmagnetischen Bauelemente.

Bei Verwendung von Kontaktelementen aus weichmagnetischem oder ferromagnetischem Stahl, insbesondere ferromagnetischem rostfreien Stahl - ist es möglich, das durch das Lötwerkzeug erzeugte Induktionsfeld ohne weitere Führung der Feldlinien in das Kontaktelement einzukoppeln.

Erfindungsgemäß liegt der kleinste Abstand zwischen der Induktionsschleife und dem Kontaktelement im Endbereich der Induktionsschleife vor. Mit anderen Worten: Die Induktionsschleife kommt in ihrem End- oder Umkehrbereich dem Kontaktelement am nächsten. Insbesondere liegt der kleinste Abstand zwischen dem Endbereich der Induktionsschleife und einem Bereich des Kontaktelements über oder oberhalb der zweiten Lötanschlussfläche vor. Über oder oberhalb bedeutet hier auf dem der zweiten Lötanschlussfläche abgewandten Seite des Kontaktelements. Der Endbereich der Induktionsschleife ist die "Lötspitze" des Lötwerkzeugs. Das magnetische Induktionsfeld, dass zum Erwärmen des Kontaktelements dient, wird vom Endbereich der Induktionsschleife in das Kontaktelement abgestrahlt.
In den metallischen und insbesondere ferromagnetischen Bestandteilen des Kontaktelements entsteht Wärme, die das angrenzende Lotdepot und die daran angrenzende Leiterstruktur erwärmt und dadurch eine Lötstelle ausbildet.

Besonders geeignet sind dazu Kontaktelemente aus ferromagnetischen Stählen mit einem µᵣ>> 1, bevorzugt aus nichtrostendem ferromagnetischem Stahl. Zu dieser Gruppe gehören insbesondere ferritische Stähle und nichtrostende ferritische Stähle, martensitische Stähle und nichtrostende martensitische Stähle sowie Duplexstähle und nichtrostende Duplexstähle. Als Duplexstahl bezeichnet man einen Stahl, der ein zweiphasiges Gefüge aufweist, das aus einer Ferrit-(α-Eisen-)Matrix mit Inseln aus Austenit besteht. Die Polarisation dieser Stähle neigt hier dazu, sich an das externe Feld anzugleichen, es zu kanalisieren und zu verstärken.

Es versteht sich, dass es genügt, wenn das Kontaktelement eine ausreichende Große Menge an ferromagnetischem Stahl enthält. Das heißt, es können beispielsweise noch weitere dünne Schichten aus anderen Metallen angeordnet sein, z.B. zum Korrosionsschutz oder Rostschutz, auf dem Kontaktelement oder zur Verbesserung der elektrischen Leitfähigkeit oder Benetzbarkeit durch ein Lot. Zusätzlich kann das Kontaktelement noch weitere nichtmetallische Bestandteile enthalten, beispielsweise ein Gehäuse aus einem temperaturbeständigen Kunststoff oder einer Keramik. Besonders bevorzugt ist es, wenn das Kontaktelement vollständig aus ferromagnetischem, nichtrostendem Stahl besteht.

Die Leiterstruktur auf der Scheibe enthält eine (erste) Lötanschlussfläche. Das Kontaktelement enthält eine (zweite) Lötanschlussfläche. Die Lötanschlussflächen sind dazu geeignet, mit dem Lot aus einem Lotdepot, die Lötstelle auszubilden.

Der Wärmeeintrag erfolgt primär über das Kontaktelement. Das heißt, die Lötanschlussfläche des Kontaktelements wird unmittelbar erwärmt. In Folge wird das an das Kontaktelement angrenzende Lotdepot erwärmt und dann erst die Lötanschlussfläche der Leiterstruktur auf der Scheibe. Dies hat mehrere entscheidende Vorteile. Durch die direkte Erwärmung des Kontaktelements wird die notwendige eingestrahlte Energie sehr zielgerichtet verwendet, so dass eine Energieersparnis im Vergleich zu Techniken des Stands der Technik erfolgt. Durch die nur indirekte Erwärmung der Lötanschlussfläche auf der Leiterstruktur der Scheibe wird diese sehr schonend erwärmt, so dass es zu weniger Beschädigungen der Leiterstruktur und der Scheibe kommt.

Es versteht sich, dass das Lötwerkzeug auch mehr als eine Induktionsschleife aufweisen kann, beispielsweise um ein Kontaktelement mit mehreren Lotanschlussflächen (z.B. in einer Brückenkonfiguration) oder mehrere Kontaktelemente nebeneinander (z.B. in einer Multipolkonfiguration) zeitgleich zu verlöten.

Das Lötwerkzeug ist unmittelbar benachbart zum Kontaktelement und damit auf der der Lötstelle und der Leiterstruktur zugewandten Seite der Scheibe angeordnet.

Zum Erzielen einer gleichbleibend hohen Lötqualität ist es vorteilhaft, den Abstand zwischen dem Lötwerkzeug und dem Kontaktelement möglichst bei jeder Scheibe gleich zu halten. Hier ist vorteilhafterweise ein sehr enger, wohldefinierter Luftspalt, bevorzugt mit einem Spaltmaß von 0,1 mm bis 5 mm, besonders bevorzugt von 0,25 mm bis 5 mm und insbesondere von 0,25 mm bis 2 mm, zwischen dem Lötwerkzeug und dem Kontaktelement vorgesehen, um eine Berührung und elektrische Kurzschlüsse gänzlich zu vermeiden.

Alternativ oder in Kombination mit einem Luftspalt kann auch das Lötwerkzeug an seiner dem Kontaktelement zugewandten Oberfläche eine elektrisch isolierende Zwischenlage oder Einhausung, beispielsweise aus einem thermisch beständigen Kunststoff oder einer Keramik aufweisen. Es versteht sich, dass in dieser Konfiguration die Scheibe selbst nicht als Zwischenlage dient.

Alternativ oder in Kombination mit dem oben genannten, kann auch das Kontaktelement an seiner dem Lötwerkzeug zugewandten Oberfläche eine elektrisch isolierende Zwischenlage oder Einhausung aufweisen, beispielsweise aus einem thermisch beständigen Kunststoff oder einer Keramik.

Die Werkzeuge können für Serienproduktionen vorteilhaft stationär in Vorrichtungen oder Lötstationen eingebaut werden, in welche die zum Herstellen der Lötanschlüsse vorbereiteten Scheiben eingelegt und positioniert werden. Die stationäre Anordnung der Lötwerkzeuge hat den weiteren Vorteil, dass benötigte Versorgungsleitungen nicht bewegt werden müssen. Alternativ kann das Lötwerkzeug beweglich ausgebildet werden und dadurch eine flexiblere Positionierung auf der Scheibe ermöglichen. Außerdem können mit einem Lötwerkzeug mehrere Anschlüsse nacheinander verlötet werden.

In einer vorteilhaften Ausgestaltung umfasst die Vorrichtung mindestens einen Gegenhalter zum Aufdrücken des Kontaktelements auf die Scheibe. In einer weiteren vorteilhaften Ausgestaltung der Erfindung ist der Gegenhalter mit Greifwerkzeugen zum Positionieren der Kontaktelemente kombiniert.

Die Gegenhalter oder Greifwerkzeuge werden vorteilhafterweise unabhängig vom Lötwerkzeug ausgebildet. An den Lötwerkzeugen tritt nahezu kein Verschleiß auf. Gegenhalter und Greifwerkzeuge zum Aufsetzen der zu verlötenden Bauteile können ohne Lötwerkzeug einfacher und kompakter ausgeführt und einfacher ausgetauscht werden.

Alternative Gegenhalter oder Greifwerkzeuge können vorteilhafterweise mit dem Lötwerkzeug und insbesondere mit der Induktionsschleife oder der Induktionsspule verbunden ausgebildet sein, insbesondere als Einhausung der Induktionsschleife oder der Induktionsspule.

Während des Lötvorgangs werden die Anschlussteile nur lose mithilfe von einfachen Gegenhaltern und/oder Greifwerkzeugen an die Scheibenoberfläche gedrückt, die selbst nicht durch das Magnetfeld aufgeheizt werden. Diese Werkzeuge können z. B. aus Kunststoff oder Keramik oder beidem bestehen bzw. in den Zonen ihres Kontakts zu den Lötstücken mit entsprechenden nichtmetallischen Einsätzen bestückt sein. Insbesondere bestehen die Gegenhalter nur aus nichtferromagnetischen und insbesondere nichtferritischen Werkstoffen. Dadurch kann die vom Induktionsgenerators notwendige eingekoppelte elektrische Leistung verringert werden.

In einer weiteren vorteilhaften Ausgestaltung enthält die Vorrichtung einen Roboter zum Führen und Anlegen des mindestens einen Lötwerkzeuges an die Scheibe und/oder der Scheibe an das Lötwerkzeug.

In einer weiteren vorteilhaften Ausgestaltung enthält die Vorrichtung einen Roboter zum Führen und Anlegen der Gegenhalter und/oder Greifwerkzeuge.

In einer weiteren vorteilhaften Ausgestaltung weist der Gegenhalter und/oder das Greifwerkzeug keine Bauelemente zum Lenken und Führen der Feldlinien des Magnetfeldes auf und insbesondere keine ferromagnetischen oder ferritischen Bauelemente.

In einer weiteren vorteilhaften Ausgestaltung sind in der Umgebung der Lötstelle keine Bauelemente zum Lenken und Führen der Feldlinien des Magnetfeldes und insbesondere keine ferromagnetischen oder ferritischen Bauelemente angeordnet.

Die Scheiben sind bevorzugt Einzelscheiben oder Verbundscheiben aus zwei oder mehreren Einzelscheiben, wie sie im Automobilbereich oder im Baubereich üblicherweise verwendet werden. Die Einzelscheibe oder die einzelnen Scheiben der Verbundscheibe sind bevorzugt aus Glas gefertigt, besonders bevorzugt aus Kalk-Natron-Glas, wie es für Fensterscheiben üblich ist. Die Scheiben können aber auch aus anderen Glassorten gefertigt sein, beispielsweise Quarzglas, Borosilikatglas oder Alumino-Sililat-Glas, oder aus starren klaren Kunststoffen, beispielsweise Polycarbonat oder Polymethylmethacrylat.

Die Leiterstrukturen können alle Arten von elektrischen Leitern umfassen, die auf einer Scheibe angeordnet werden können und zum Verlöten geeignet sind. Dies sind insbesondere aufgedruckte Silberleiter, hergestellt aus einer aufgedruckten und anschließend eingebrannten Dickschicht aus einer Siebdruckpaste mit relativ hohem Silberanteil. Alternativ können auch aufgeklebte oder anderweitig befestigte Metalldrähte oder Metallfolien als Leiterstrukturen verwendet werden.

Gezeigt, aber nicht beansprucht, ist insbesondere eine Vorrichtung zum induktiven Verlöten mindestens eines, bevorzugt weichmagnetischen und besonders bevorzugt ferromagnetischen, Kontaktelements mit mindestens einer Leiterstruktur auf einer nichtmetallischen Scheibe, umfassend
- Mittel zum Festlegen der Scheibe während des Lötvorgangs,
- mindestens ein Lötwerkzeug, welches
   - eine Induktionsschleife und
   - einen Induktionsgenerator, der mit der Induktionsschleife elektrisch leitend verbunden ist, umfasst,
   wobei die Induktionsschleife
   - aus einem Metallprofil besteht,
   - mindestens einen U-förmigen Bereich oder zwei U-förmige Bereiche aufweist, und jeder U-förmige Bereich jeweils zwei Schenkel und einen die Schenkel verbindenden Endbereich aufweist, und
   - der mindestens eine U-förmige Bereich eine Länge L von mindestens 3 mm und bevorzugt bis 500 mm, und eine Breite B von 2 mm bis 30 mm, bevorzugt von 4 mm bis 25 mm aufweist,
- Mittel zum gegenseitigen Positionieren des Lötwerkzeugs und des Kontaktelements derart, dass das eingeschaltete Magnetfeld des Lötwerkzeugs das Kontaktelement und damit die Lötstelle, bevorzugt auf eine Temperatur über der Schmelztemperatur eines Lots, erhitzt,
- mindestens einen Gegenhalter zum Aufdrücken des Kontaktelements auf die Scheibe, wobei bevorzugt der Gegenhalter mit Greifwerkzeugen zum Positionieren der Kontaktelemente kombiniert ist, und
- wobei der Gegenhalter und gegebenenfalls das Greifwerkzeug im Wirkungsbereich der Induktionsschleife keine Bauelemente zum Lenken und Führen der Feldlinien des Magnetfeldes und insbesondere keine ferromagnetischen oder ferritischen Bauelemente aufweist.

Gezeigt, aber nicht beansprucht, ist ein System aus der Vorrichtung mit Lötwerkzeug und mindestens einem, bevorzugt weichmagnetischen und besonders bevorzugt ferromagnetischen, Kontaktelement, sowie bevorzugt mindestens einem Lotdepot, und mindestens einer Leiterstruktur auf einer nichtmetallischen Scheibe.

Die Erfindung zeigt ein Verfahren zum Verlöten mindestens eines ferromagnetischen Kontaktelements mit mindestens einer Leiterstruktur auf einer nichtmetallischen Scheibe entsprechend Anspruch 1, wobei
a) eine nichtmetallische Scheibe, bevorzugt aus Glas oder Kunststoff, mit mindestens einer darauf angeordneten Leiterstruktur und mindestens einer ersten Lötanschlussfläche bereitgestellt wird,
b) mindestens ein Kontaktelement aus einem ferromagnetischen Stahl mit mindestens einer zweiten Lötanschlussfläche bereitgestellt wird,
c) mindestens ein Lotdepot zumindest abschnittsweise auf der ersten Lötanschlussfläche oder auf der zweite Lötanschlussfläche oder auf beiden angeordnet wird,
d) die zweite Lötanschlussfläche auf der ersten Lötanschlussfläche angeordnet wird, wobei das Lotdepot zumindest abschnittsweise zwischen der ersten Lötanschlussfläche und der zweiten Lötanschlussfläche angeordnet wird,
e) ein Magnetfeld mit einer vorgegebenen Frequenz von einem eine elektrisch gespeiste Induktionsschleife umfassenden Lötwerkzeug in das Kontaktelement abgestrahlt wird, um dieses durch Induktion zu erhitzen und das daran anliegende Lotdepot aufzuschmelzen.

In einem weiteren Verfahrensschritt wird vorteilhafterweise das Magnetfeld entfernt, beispielsweise durch Abschalten der Speisespannung oder durch Entfernen des Lötwerkzeugs, worauf das Kontaktelement und das Lot abkühlen und sich das Lot verfestigt.

In einer vorteilhaften Ausführungsform des erfindungsgemäßen Verfahrens wird die Frequenz der an die Induktionsschleife angelegten Wechselspannung an die Anschlussgeometrie angepasst und höchstens bei 1500 kHz eingestellt.

In einer vorteilhaften Ausführungsform des erfindungsgemäßen Verfahrens wird die Frequenz des Magnetfeldes im Bereich von 5 kHz bis 1100 kHz, bevorzugt von 40 kHz bis 1100 kHz, besonders bevorzugt von 400 kHz bis 1100 kHz und insbesondere von 700 kHz und 1100 kHz. Derart hohe Frequenzen der Induktionsspannung von größer oder gleich 400 kHz und insbesondere von größer oder gleich 700 kHz führen zu einem Magnetfeld mit nur einer geringen Eindringtiefe. Dies hat den besonderen Vorteil, dass zwar das Kontaktelement, das an der zweiten Lötanschlussfläche anliegende Lotdepot und dadurch mittelbar auch die erste Lötanschlussfläche der Leiterstruktur zuverlässig erwärmt werden, jedoch die Leiterstruktur im Umgebungsbereich der ersten Lötanschlussfläche nur gering erwärmt wird. Dadurch kann eine Schädigung der Leiterstruktur und ein Ablösen der Leiterstruktur von der Scheibe zuverlässig vermieden werden.

Die einstellbare Ausgangsleistung des Induktionsgenerators wird vorteilhafterweise im Bereich von 200 W bis 15 kW und bevorzugt von 400 W bis 3 kW eingestellt.

In dem erfindungsgemäßen Verfahren wird der Endbereich der Induktionsschleife unmittelbar und/oder über eine elektrisch isolierende Zwischenlage (die insbesondere nicht die Scheibe selbst ist) oder mit einem engen Luftspalt an das Kontaktelement angelegt.

In einer vorteilhaften Ausführungsform des erfindungsgemäßen Verfahrens wird das Kontaktelement vor und während des Verlötens mithilfe von nichtferromagnetischen, bevorzugt von nichtferromagnetischen nichtmetallischen Gegenhaltern auf der Scheibe fixiert.

In einer vorteilhaften Ausführungsform des erfindungsgemäßen Verfahrens werden die Scheibe, das Kontaktelement und das mindestens eine Lötwerkzeug zumindest während des Lötvorgangs stationär in einer Vorrichtung fixiert.

In einer vorteilhaften Ausführungsform des erfindungsgemäßen Verfahrens werden die erste Lötanschlussfläche der Leiterstruktur auf der Scheibe oder die zweite Lötanschlussfläche des Kontaktelements oder beide mit einem bleihaltigen oder bleifreien Lotdepot, bevorzugt mit integriertem oder nachträglich appliziertem Flussmittel, versehen.

In einer vorteilhaften Weiterbildung des erfindungsgemäßen Verfahrens wird die Scheibe, insbesondere im Bereich der Lötanschlussfläche, von der dem Lötwerkzeug abgewandten Seite zusätzlich erwärmt. Dazu enthält die erfindungsgemäße Vorrichtung beispielsweise eine Heizung. Durch die zusätzliche Erwärmung werden temperaturbedingte Spannungen im Bereich der Lötstelle reduziert und Glasbruch beziehungsweise eine Ablösung der Leiterstruktur von der Scheibe wird vermieden. Dies ist besonders vorteilhaft bei gläsernen Scheiben, da dort die Haftung der Leiterstruktur auf der Scheibe besonders empfindlich ist.

Induktionsspulen nach dem Stand der Technik weisen in der Regel mehrere Windungen auf, die um eine Achse (auch Spulenkern genannt) gewickelt sind.

Die magnetische Flussdichte B im Inneren einer langgestreckten luftgefüllten Zylinderspule ergibt sich zu B=µ₀·l·N/L, wobei I die Stromstärke, N die Windungszahl, L die Spulenlänge und µ₀ die Magnetische Feldkonstante ist. Die Richtung der Achse ist identisch mit der Richtung der Spulenlänge L und mit der Flächennormalen N, der von den Windungen der Induktionsspule umschlossenen Fläche. Zur Verstärkung des Magnetfeldes einer Spule bringt man häufig geeignetes Material (z. B. ferromagnetische Stoffe) in das Spuleninnere. Die dadurch bedingte Verstärkung des Magnetfelds berücksichtigt man bei obiger Formel mit einem dimensionslosen Faktor, der relativen Permeabilität µᵣ, so dass die magnetische Flussdichte dann B=µ₀· µᵣ·I·N/L beträgt.

Verwendet man, wie es der Stand der Technik lehrt, eine Spule als Induktionsspule, so bringt man die zu erwärmenden Materialien entweder in den Innenraum der Spule (insbesondere bei einfachen Ringspulen) oder in die Nähe einer Stirnseite der Spule, da dort die magnetischen Feldlinien den Spulenkern verlassen und - abgesehen vom Inneren der Spule - maximal sind. Dabei werden in der Regel die Flächennormalen der Lötanschlussflächen der zu verlötenden Bauelemente parallel zur Spulenachse (und damit zur Flächennormalen der Spulenwindungen) angeordnet, da dies konstruktionstechnisch zum geringsten Abstand zwischen Lötstelle und Stirnfläche führt. Dies ist unabhängig davon, ob der Spulenkern luftgefüllt ist oder ein ferromagnetisches Material enthält.

Das in dem erfindungsgemäßen Verfahren eingesetzte Lötwerkzeug beruht auf einem vollkommen anderen Prinzip. So enthält die Induktionsschleife kein ferromagnetisches Material. Die Induktionsschleife wird hingegen derart ausgestaltet, dass sie mit Ihrem Endbereich einen minimalen Abstand zu einem ferromagnetischen Kontaktelement aufweist. Im ferromagnetischen Kontaktelement wird das vom Endbereich der Induktionsschleife ausgestrahlte Magnetfeld gebündelt und verstärkt. Dies führt zu einer fokussierten Erwärmung des ferromagnetischen Kontaktelements, ohne weiter entferntes ferromagnetisches oder nichtmagnetisches Material annähernd zu erwärmen. Durch das erwärmte Kontaktelement wird ein an einer (zweiten) Lötanschlussfläche des Kontaktelements angeordnetes oder in Kontakt stehendes Lot ebenfalls erwärmt, bis seine Löttemperatur erreicht ist. Anschließend erwärmt das geschmolzene Lot eine (erste) Lötanschlussstelle einer weiteren zu verlötenden Leiterstruktur. Die Erwärmung erfolgt also wesentlich durch die fokussierte Einkopplung des Magnetfelds aus dem Endbereich der Induktionsschleife in das ferromagnetische Kontaktelement. Die Löttemperatur ist bevorzugt eine Temperatur über der Schmelztemperatur, bei der das Lot eine Lötverbindung mit den angrenzenden Lötanschlussflächen ausbildet.

Im Gegensatz zu Induktionsspulen nach dem Stand der Technik, bei denen die Flächennormalen der Lötanschlussflächen parallel zur Spulenachse und damit parallel zur Flächennormalen der Spulenwindungen angeordnet ist, ist dies bei erfindungsgemäßen Induktionsschleifen nicht notwendig. Vorteilhafterweise ist der Winkel α (alpha) zwischen der Flächennormalen der Induktionsschleife und der Flächennormalen der Lötanschlussfläche des Kontaktelements ungleich 0 (null), Bevorzugt beträgt der Winkel α (alpha) 30°, besonders bevorzugt größer oder gleich 45° und insbesondere von 50° bis 90°.

Weitere Einzelheiten und Vorteile der erfindungsgemäßen Lösung ergeben sich aus den beigefügten Zeichnungen von Beispielen möglicher Anwendungsfälle und aus deren eingehender Beschreibung.

Es zeigen in schematischer und nicht maßstäblicher Darstellung:
- Figur 1: eine schematische Darstellung einer Vorrichtung mit einem Lötwerkzeug und einem vergrößerten Detail einer Lötstelle,
- Figur 2: eine Ansicht einer Scheibe mit Kontaktelementen,
- Figur 3A: eine Detaildarstellung der beispielhaften Induktionsschleife 131 aus Figur 1 in einer Draufsicht,
- Figur 3B: eine Detaildarstellung der beispielhaften Induktionsschleife 131 aus Figur 3A in einer Seitenansicht von links,
- Figur 3C: eine Querschnittsdarstellung entlang der Schnittebene, die durch die Schnittlinie X-X' aus Figur 3A und die Schnittlinie Y-Y' aus Figur 3B aufgespannt wird,
- Figur 4: eine Querschnittsdarstellung einer alternativen Induktionsschleife aus einem Hohlprofil mit rechteckigem Querschnitt,
- Figur 5: eine perspektivische Darstellung einer Induktionsschleife mit einem beispielhaften Kontaktelement in Brückenform,
- Figur 6A: eine Detaildarstellung eines weiteren Ausgestaltungsbeispiels einer erfindungsgemäßen Induktionsschleife mit um 90° gedrehtem U-förmigen Bereich in einer Draufsicht,
- Figur 6B: eine Detaildarstellung der Induktionsschleife aus Figur 6A in einer Seitenansicht von links,
- Figur 7: eine Detaildarstellung eines weiteren Ausgestaltungsbeispiels einer Induktionsschleife mit geradem Umkehrbereich,
- Figur 8: eine Detaildarstellung eines weiteren Ausgestaltungsbeispiels einer Induktionsschleife mit Doppel-U-Form, und
- Figur 9: eine perspektivische Darstellung einer Induktionsschleife mit gedrehter DoppelU-Form und einem beispielhaften Kontaktelement in Brückenform.

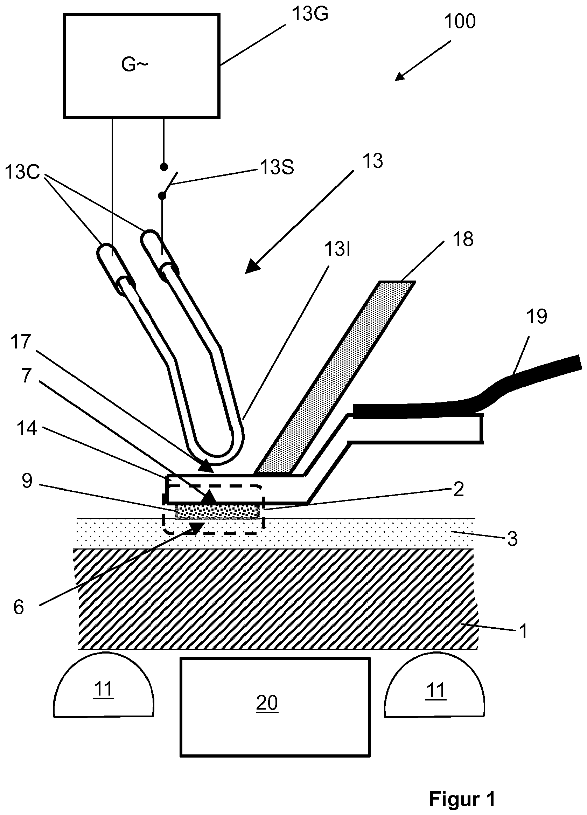

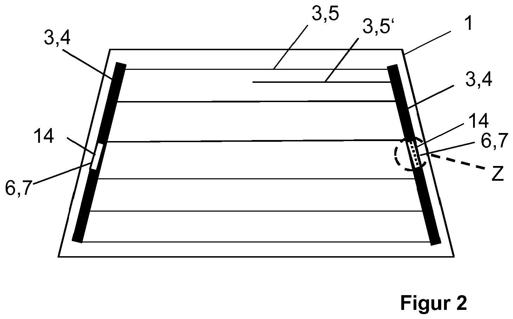

Figur 1 zeigt eine schematische Darstellung einer Vorrichtung 100 mit einem Lötwerkzeug 13 beim Verlöten eines Kontaktelements 14 mit einer Leiterstruktur 3. Figur 1 zeigt ein Detail der in Figur 2 dargestellten Scheibe 1 anhand einer Querschnittsdarstellung entlang der gepunkteten Linie im Bereich Z.

Figur 2 zeigt eine trapezflächige Scheibe 1 aus Glas oder Kunststoff, deren in Blickrichtung obenliegende Oberfläche entlang ihrem Rand mit einer opaken und beispielsweise schwarzen, elektrisch nicht leitfähigen Beschichtung versehen ist (hier der Einfachheit halber nicht dargestellt). Es handelt sich beispielsweise um eine Rückwandscheibe eines Kraftfahrzeuges, hier vereinfacht ohne Wölbung dargestellt. Auf deren Oberfläche sind des Weiteren elektrische Leiterbahnen oder -strukturen 3, beispielsweise Heizleiter 5 und Antennenleiter 5', vorgesehen, die sich über das Sichtfeld der Scheibe und/oder randseitig bis auf die opake Beschichtung erstrecken. Entlang des linken und rechten Rands der Scheibe 1 sind Sammelleiter 4 vorgesehen. Ferner sind mehrere erste Lötanschlussflächen 6 zum elektrischen Kontaktieren der Leiterstrukturen 3 über die Sammelleiter 4 vorgesehen, auf die später noch näher einzugehen sein wird. Hier ist vereinfacht eine spiegelbildlich gleiche Konfiguration von Sammelleitern und ersten Lötanschlussflächen 6 angedeutet. Die Konfigurationen der Sammelleiter und Lötanschlussflächen können real jedoch nach Scheibenseiten unterschiedlich sein. Die ersten Lötanschlussflächen 6 können auch an den Langseiten der hier gezeigten Scheibenform angeordnet sein.

Das Layout der Heizleiter 5 und Antennenleiter 5' im zentralen Sichtfeld der Scheibe 1 ist nur vereinfacht dargestellt und schränkt die Erfindung in keiner Weise ein. Für die vorliegende Beschreibung ist es ohnehin unwesentlich, denn diese soll lediglich die Herstellung der hier randseitigen elektrischen Anschlüsse der Leiterstrukturen 3 durch Löten mit induktiver Wärmeerzeugung erörtern.

Die Leiterstrukturen 3, die Sammelleiter 4 und die ersten Lötanschlussflächen 6 werden üblicherweise durch Drucken einer elektrisch leitfähigen Druckpaste in Dickschichttechnik und anschließendes Einbrennen hergestellt. Das Einbrennen auf Glasscheiben erfolgt vorzugsweise beim Erwärmen der Glasscheibe beim Biegen. Das Drucken erfolgt vorteilhafterweise durch Siebdruck. Die elektrisch leitfähige Druckpaste ist vorteilhafterweise silberhaltig.

Die Scheibe 1 ist in die Vorrichtung 100 eingelegt, zu der unter anderem das Lötwerkzeug 13 und Mittel 11 zum Auflegen der Scheibe 1 sowie gegebenenfalls weitere Anschläge und Positionierungshilfen gehören. Die Auflagemittel 11 liegen hier beispielsweise in Blickrichtung hinter/unter der Scheibe 1 und das Lötwerkzeug 13 vor/über der Scheibe 1. Man erkennt insbesondere, dass das in der Vorrichtung fixierte Lötwerkzeug 13 in der vertikalen Projektion auf die Scheibenfläche über der ersten Lötanschlussfläche 6 angeordnet ist.

Des Weiteren sind Kontaktelemente 14 dargestellt. Die Kontaktelemente 14 weisen jeweils eine zweite Lötanschlussfläche 7 auf. Diese ist in der vertikalen Projektion auf die Scheibenfläche über der ersten Lötanschlussfläche 6 angeordnet ist. Zwischen der ersten Lötanschlussfläche 6 der Leiterstruktur 3 der Scheibe 1 und der zweiten Lötanschlussfläche 7 des Kontaktelements 14 ist ein Lotdepot 9 angeordnet. Nach dem Verlöten entsteht zwischen der ersten Lötanschlussfläche 6 und der zweiten Lötanschlussfläche 7 die Lötverbindung. An die Kontaktelemente 14 sind funktionsentsprechend elektrische Zuleitungen 19 wie Versorgungs- oder Anschlussleitungen bzw. Antennenkabel angeschlossen, beispielsweise durch Verklemmen (Crimpen), Punktschweißen, Schrauben oder andere Verbindungstechniken.

Die Kontaktelemente 14 enthalten beispielsweise einen ferromagnetischen nichtrostenden Edelstahl und bestehen im Wesentlichen daraus. Das heißt, das Kontaktelement 14 enthält zumindest einen Kern aus dem ferromagnetischen nichtrostenden Edelstahl. Das Kontaktelement 14 kann beispielsweise zusätzlich an der der zweiten Lötanschlussstelle 7 abgewandten Oberfläche eine Ummantelung aufweisen, vorzugsweise aus einem geeigneten (elektrisch isolierenden) Kunststoff. Des Weiteren kann das Kontaktelement 14 an den Oberflächen des Kerns noch dünne Schichten aus anderen, nicht notwendigerweise ferromagnetischen Metallen, aufweisen, beispielsweise zum verbesserten Korrosionsschutz. Auf die besondere Rolle der ferromagnetischen Eigenschaft des Kontaktelements 14 wird unten weiter eingegangen.

Das Lotdepot 9 besteht aus einer dünnen Schicht eines bleihaltigen oder bleifreien Lots, ggf. mit integriertem oder nachträglich appliziertem Flussmittel. Es kann ggf. genügen, nur auf einer der beiden jeweils zu verlötenden Flächen ein Lotdepot 9 anzulegen, also entweder auf der ersten Lötanschlussfläche 6 oder der zweiten Lötanschlussfläche 7, wenn sichergestellt wird, dass die eingetragene Energie sämtliche Bauteile hinreichend für eine gute beidseitige Verlötung erwärmen kann und die nicht verzinnte Oberfläche vom Lot benetzbar ist.

Das Kontaktelement 14, das Lotdepot 9, die Leiterstruktur 3 und die Scheibe 1 sind hier nur schematisch wiedergegeben. Das heißt insbesondere, dass die dargestellten Dicken nicht maßstäblich wiedergegeben sind.

Das Kontaktelement 14 wird hier beispielsweise durch einen oder mehrere Gegenhalter 18 auf die Scheibe 1 aufgedrückt und positioniert. Die Gegenhalter 18 können beispielsweise und vorteilhaft zugleich auch fernsteuerbare Greif- und Positionierwerkzeuge in einer automatisierten Fertigungslinie sein. Sie entnehmen die zunächst lose beweglichen Kontaktelemente 14 aus den jeweiligen Vorratsmagazinen, positionieren sie auf den zugehörigen ersten Lötanschlussflächen 6 und halten sie während des Lötvorgangs bis zum Erstarren des Lots fest. Wie in Figur 1 dargestellt, ist das Lötwerkzeug 13 unmittelbar über dem Kontaktelement 14 und insbesondere über der zweiten Lötanschlussfläche 7 und dem Lotdepot 9 angeordnet.

Das Lötwerkzeug 13 enthält hier eine Induktionsschleife 13I, die von einem handelsüblichen Induktionsgenerator 13G mit einer Wechselspannung mit einstellbarer Frequenz und Leistung versorgt wird. Symbolisch ist ferner ein Schalter 13S in der Verbindung zwischen dem Induktionsgenerator 13G und der Induktionsschleife 13I angedeutet, mit dem der Betrieb der Induktionsschleife 13I steuerbar ist. Schließlich kann das Lötwerkzeug 13 bei Bedarf über Rohranschlüsse 13C gekühlt werden. Abweichend von der schematischen Darstellung wird man ggf. die Zufuhr des Kühlmittels und die elektrischen Speiseleitungen zusammenfassen. Beispielsweise kann die Induktionsschleife 13I aus Metallprofil in Form eines metallenen oder metallischen Hohlprofils mit beispielsweise kreisförmigem Querschnitt bestehen, durch das das Kühlmittel fließt, und das gleichzeitig als Hochfrequenz-Induktionsschleife wirkt. Das Hohlprofil kann beispielsweise aus versilbertem Kupfer bestehen.

Das im Vergleich mit herkömmlichen Hochfrequenz-Induktionsschleifen oder -spulen hier verwendete Lötwerkzeug 13 enthält eine Hohlprofilschleife, deren Abmessungen im Wesentlichen der Länge und Breite des Lötwerkzeugs entsprechen. Das Ausfüllen der Zwischenräume in an sich bekannter Weise mithilfe von Körpern aus Ferrit oder anderweitigen gleich geeigneten Materialien ist nicht nötig. Derartige Ferrit-freie Lötwerkzeuge 13 sind insbesondere in Kombination mit ferromagnetischen Kontaktelementen 14 besonders einfach, flexibel und energiesparend verwendbar.

Durch die Anordnung des Lötwerkzeugs 13 unmittelbar über dem ferromagnetischen Material des Kontaktelements 14 wird das vom Induktionsfeld abgestrahlte Magnetfeld im bzw. durch das Kontaktelement 14 konzentriert und so optimiert, dass es möglichst intensiv und konzentriert auf die Lötstellen 2 gelenkt wird und einwirkt. Es kommt also weniger auf das Erzielen hoher Homogenität auf großen Flächen an, als vielmehr darauf, das Magnetfeld in das besonders ausgebildete Kontaktelement 14 zu lenken. Die Erwärmung des Kontaktelements 14 führt über die zweite Lötanschlussfläche 7 zu einer raschen und intensiven Erhitzung des Lotdepot 9 und der angrenzenden ersten Lötanschlussstellen 6.

Das Lötwerkzeug 13 benötigt dabei keine besonderen Elemente, wie Ferritelemente oder funktionsgleiche Bauelemente, zum Formen und Führen der Feldlinien, wie dies in Induktionslötwerkzeugen nach dem Stand der Technik der Fall ist. Auch die Gegenhalter 18 und andere etwaige Bauelemente in der Umgebung des Lötwerkzeugs 13 enthalten keine Ferrite oder ferromagnetischen Materialien oder ähnliches. Die Konzentration des Magnetfelds auf die Lötstelle 2 erfolgt nur über das ferromagnetische Kontaktelement 14. Dies ist besonders effizient und energieeinsparend. Gleichzeitig ist das Lötwerkzeug 13 besonders flexibel für eine Vielzahl von Anschlusskonfigurationen geeignet und muss nicht, wie nach dem Stand der Technik erforderlich, an das jeweilige Kontaktelement 14 angepasst werden.

Zum Erzielen einer gleichbleibend hohen Lötqualität ist es vorteilhaft, den Abstand zwischen dem Lötwerkzeug 13 und dem Kontaktelement 14 möglichst bei jeder Scheibe gleich zu halten. Hier ist erfindungsgemäß ein sehr enger, wohldefinierter Luftspalt 17 von beispielsweise 0,5 mm zwischen dem Lötwerkzeug 13 und dem Kontaktelement 14 vorgesehen. Ein derartiger Luftspalt 17 vermeidet zuverlässig eine Berührung und elektrische Kurzschlüsse gänzlich. Alternativ kann die Induktionsschleife 13I des Lötwerkzeugs eine Einhausung aufweisen, mit der das Kontaktelement 14 auf die Scheibe aufgedrückt und positioniert werden kann (hier nicht dargestellt). Die Einhausung besteht beispielsweise aus einem thermisch stabilen Kunststoff oder einer Keramik und ist insbesondere nicht weichmagnetisch.

Alternativ kann auch das Kontaktelement 14 an seiner dem Lötwerkzeug 13 zugewandten Oberfläche eine elektrisch isolierende Zwischenlage oder Einhausung aufweisen, beispielsweise aus einem thermisch beständigen Kunststoff oder einer Keramik.

Das kompakte Lötwerkzeug 13 kann problemlos beweglich ausgebildet werden und beispielsweise mithilfe von Robotern mit reproduzierbaren Positionen an eine zu bearbeitende Scheibe angelegt werden. Dies wird man beispielsweise dann bevorzugen, wenn keine hohen Stückzahlen immer gleichbleibender Scheiben zu verarbeiten sind, oder häufige Modellwechsel auf derselben Vorrichtung zu verarbeiten sind.

Selbstverständlich kann das Lötwerkzeug 13 in der Vorrichtung 100 auch ortsfest/stationär angeordnet werden. Die jeweils zu bearbeitende Scheibe wird mittels nicht gezeigter Fördermittel auf die Auflagemittel 11 aufgelegt und an das Lötwerkzeug 13 herangefahren.

Zum Herstellen der Lötverbindungen wird die Induktionsschleife 13I durch Einschalten ihrer Stromversorgung (Schließen des Schalters 13S) mit Strom der gewünschten Frequenz (beispielsweise 900 kHz) beaufschlagt. Eine typische Leistung im Bereich von 0,2 kW bis 15 kW wird eingestellt, die je nach Schleifenabstand, (Gesamt-)Fläche der Lötstellen und der zu erwärmenden Massen variiert werden kann. Das Magnetfeld durchdringt den Luftspalt 17 oder eventuelle Zwischenlagen ohne übermäßige Dämpfung. Die Dämpfung ist umso geringer, je weniger Luftspalte bzw. Zwischenlagenmaterial vorliegen.

In den metallischen und insbesondere ferromagnetischen Bestandteilen des Kontaktelements 14 entsteht Wärme, die das angrenzende Lotdepot 9 erwärmt.

Eine erfindungsgemäße hohe Frequenz der Induktionsspannung von beispielsweise 900 kHz führt zu einem Magnetfeld mit nur einer geringen Eindringtiefe. Dies hat den besonderen Vorteil, dass zwar das Kontaktelement 14, das an der zweiten Lötanschlussfläche 7 anliegende Lotdepot 9 und dadurch mittelbar auch die erste Lötanschlussfläche 6 der Leiterstruktur 3 zuverlässig erwärmt werden, jedoch die Leiterstruktur 3 im Umgebungsbereich der ersten Lötanschlussfläche 6 nur gering erwärmt wird. Dadurch kann eine Schädigung der Leiterstruktur 3 und ein Ablösen der Leiterstruktur 3 von der Scheibe 1 zuverlässig vermieden werden.

Die benötigte Einschaltdauer des Magnetfelds bis zum vollständigen Aufschmelzen des Lotdepots 9 sowie der beste Frequenzbereich lassen sich durch Versuche einfach und gut reproduzierbar ermitteln, sowie durch geeignete Software simulieren. Nach dem Lötvorgang wird das Magnetfeld abgeschaltet (der Schalter 13S geöffnet). Die Scheibe 1 wird noch kurz festgehalten, ebenso die Gegenhalter, bis das Lot erstarrt ist und die elektrischen Verbindungen auch ohne zusätzliche mechanische Fixierung halten. Danach wird die Scheibe 1 der weiteren Verarbeitung zugeführt.

Zum Optimieren des Lötvorgangs und zur Vermeidung von Spannungen in der Scheibe 1 und der Leiterstruktur 3 kann es vorteilhaft sein, die Scheibe 1 samt Leiterstruktur 3 im Bereich der ersten Lötanschlussstelle 6 und deren Umgebung vorzuwärmen. Dazu kann beispielsweise eine Heizung 20 unterhalb der Scheibe 1 (d.h. auf der dem Lötwerkzeug 13 und dem Kontaktelement 14 abgewandten Seite) angeordnet werden.

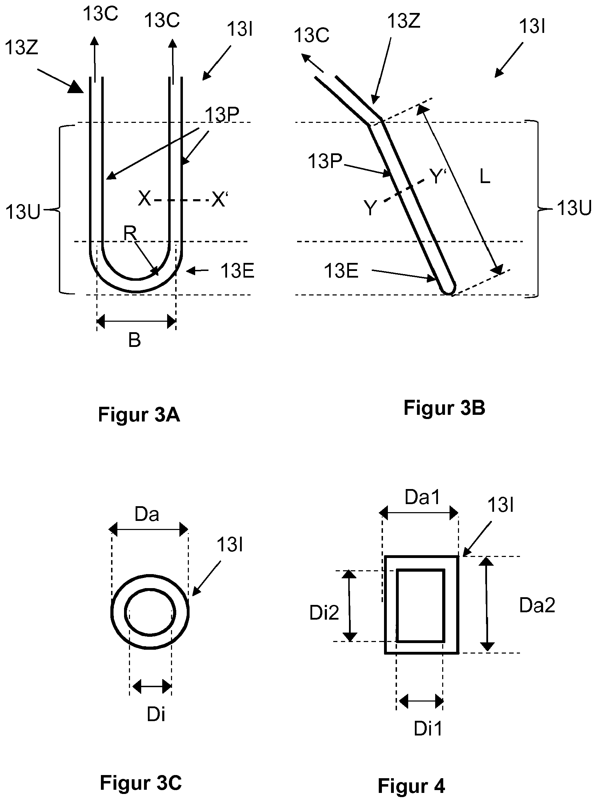

Die Figuren 3A, 3B und 3C zeigen jeweils Detaildarstellungen der beispielhaften Induktionsschleife 13I aus Figur 1. Dabei zeigt Figur 3A eine Draufsicht auf einen Bereich der Induktionsschleife 13I und Figur 3B eine Seitenansicht von links bezüglich der Draufsicht aus Figur 3A.

Die Induktionsschleife 13I ist in diesem Beispiel an einem Endbereich 13E halbkreisförmig ausgebildet. Der halbkreisförmige Endbereich 13E ist mit zwei parallelen Schenkeln 13P verbunden. Die zwei Schenkel 13P und der dazwischen angeordnete Endbereich 13E bilden einen U-förmigen Bereich 13U.

Der Krümmungsradius R der Induktionsschleife 13I im Endbereich 13E beträgt beispielsweise 3 mm. Der Krümmungsradius R dabei auf die Mitte des Hohlprofils bezogen.

Die Länge L der Induktionsschleife 13I beträgt hier beispielsweise 20 mm, kann aber auch kürzer oder länger ausgestaltet werden. Die Länge L umfasst hier die Länge der Schenkel 13P samt der Länge des Endbereichs 13E. Es versteht sich, dass das Hohlprofil im weiteren Bereich länger ausgebildet sein kann und dann über Rohranschlüsse 13C und gegebenenfalls weitere Anschlüsse mit der Kühleinheit verbunden werden kann (Zuleitungsbereich 13Z). Die Induktionsschleife 13I besteht aus einem Metall und dient daher gleichzeitig als elektrischer Leiter in den das Induktionssignal vom Induktionsgenerator 13G eingespeist wird.

Die Breite B der Induktionsschleife 13I (jeweils auf die Mitte des Hohlprofils bezogen) entspricht dem Abstand der Schenkel 13P und beträgt beispielsweise 6 mm.

Der U-förmige Bereich 13U ist über die zwei parallelen Schenkel 13P mit den zwei Rohranschlüssen 13C verbunden, über die ein Kühlmittel durch die Induktionsschleife 13I geleitet werden kann. Dazu ist die Induktionsschleife 13I aus einem durchgängigen Hohlprofil gefertigt, das, abgesehen von den Rohranschlüssen 13C, geschlossen ist. Dazu sind die Hohlräume der Schenkel 13P und des Endbereichs 13E miteinander verbunden. So kann ein Kühlmittel durch das Innere eines Schenkels 13P in den inneren Hohlraum des Endbereichs 13 und durch diesen hindurch in das Innere des zweiten Schenkels 13P geleitet werden und dadurch die Induktionsschleife 13I kühlen.

Figur 3C zeigt eine Querschnittsdarstellung entlang der Schnittebene, die durch die Schnittlinie X-X' aus Figur 3A und die Schnittlinie Y-Y' aus Figur 3B aufgespannt wird. Die Induktionsschleife 13I besteht in diesem Beispiel aus einem Hohlprofil mit einem kreisförmigen Querschnitt mit einen Innendurchmesser Di von 1 mm und einem Außendurchmesser Da von 1,8 mm.

Figur 4 zeigte eine Querschnittsdarstellung einer alternativen Induktionsschleife 13I aus einem Hohlprofil mit rechteckigem Querschnitt. Der Innendurchmesser Di1 in der kürzeren Dimension des rechteckigen Querschnitts beträgt beispielsweise 1 mm, der entsprechende Außendurchmesser Da1 beträgt beispielsweise 1,8 mm. Der Innendurchmesser Di2 in der längeren Dimension des rechteckigen Querschnitts beträgt beispielsweise 2 mm, der entsprechende Außendurchmesser Da2 beträgt beispielsweise 2,8 mm.

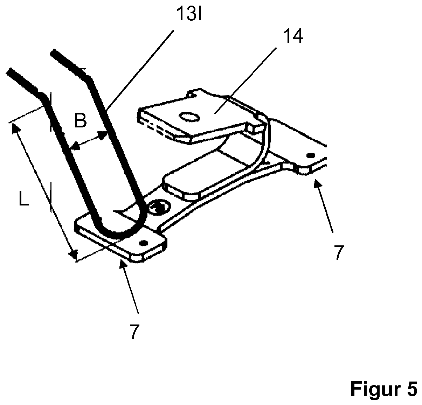

Figur 5 zeigt eine perspektivische Darstellung eines weiteren Ausgestaltungsbeispiels einer Induktionsschleife 13I mit einem beispielhaften Kontaktelement 14 in Brückenform. Der Umkehrbereich der Induktionsschleife 13I ist dabei über einem der beiden (zweiten) Lötanschlussflächen 7 des Kontaktelements 14 angeordnet.

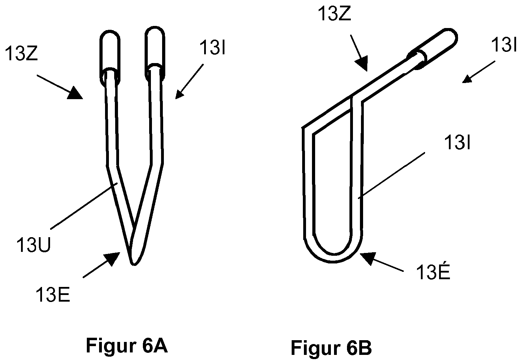

Figur 6A und 6B zeigen eine Detaildarstellung eines weiteren Ausgestaltungsbeispiels einer Induktionsschleife 13I mit um 90° gegenüber dem Zuleitungsbereich 13Z gedrehtem U-förmigen Bereich 13U. Figur 6A zeigt dabei eine Draufsicht und Figur 6B eine Seitenansicht von links.

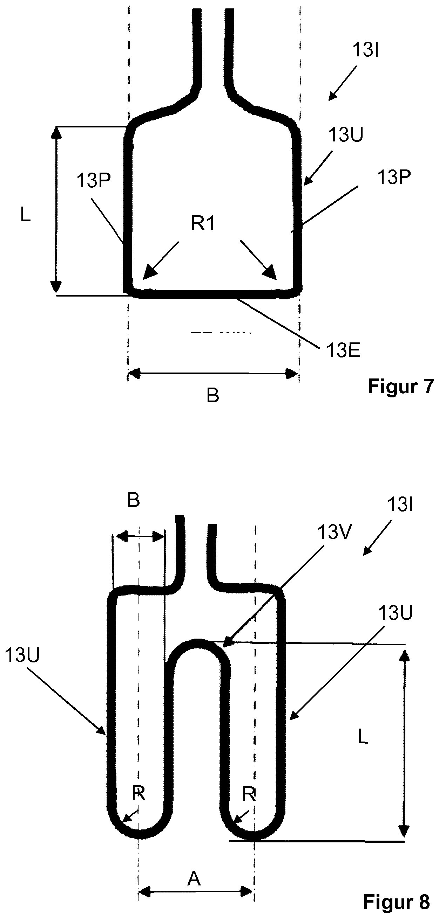

Figur 7 zeigt eine Detaildarstellung eines weiteren Ausgestaltungsbeispiels einer Induktionsschleife 13I mit geradem Endbereich 13E.

Die Länge L der des U-förmigen Bereichs beträgt beispielsweise 20 mm. Die Breite B der Induktionsschleife 13I beträgt beispielsweise 6 mm.

Der Endbereich 13E, der die Schenkel 13P verbindet, ist hier im Wesentlichen geradlinig ausgebildet. Der Krümmungsradius bei Übergang zwischen Endbereich 13E und Schenkeln 13P wird durch die technischen Möglichkeiten des Biegens des Hohlprofils begrenzt und beträgt beispielsweise 0,5 mm.

Figur 8 zeigt eine Detaildarstellung eines weiteren Ausgestaltungsbeispiels einer Induktionsschleife 13I mit Doppel-U-Form. Die Induktionsschleife 13I weist hier zwei U-förmige Bereiche 13U auf. Die U-förmigen Bereiche 13U weisen jeweils beispielsweise einen halbkreisförmige Endbereich 13E mit einem Krümmungsradius R von beispielsweise 4 mm auf. Die Breite B der U-förmigen Bereiche 13U beträgt beispielsweise 8 mm. Die beiden Ü-förmigen Bereiche 13U sind hier beispielsweise durch einen halbkreisförmigen Verbindungsbereich 13V miteinander verbunden. Der Abstand Ader Mittenlinien der U-förmigen Bereiche 13U beträgt hier beispielsweise 16 mm.

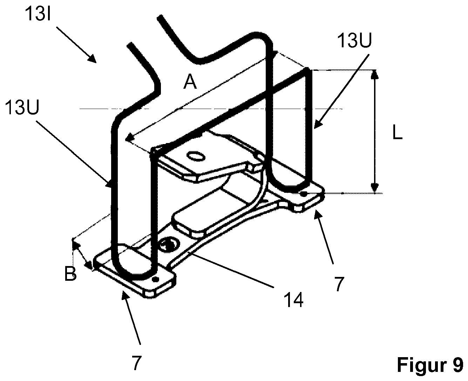

Figur 9 zeigt eine perspektivische Darstellung eines weiteren Ausgestaltungsbeispiels einer Induktionsschleife 13I mit gedrehter Doppel-U-Form und einem beispielhaften Kontaktelement 14 in Brückenform. Diese Induktionsschleife 13I ist eine Weiterentwicklung der Induktionsschleife 13I aus Figur 8. Auch hier ist die Induktionsschleife 13I aus zwei besonders vorteilhaften U-förmigen Bereichen 13U ausgebildet, die im Unterschied zur Anordnung in einer Ebene aus Figur 8, gedreht und dadurch parallel zueinander ausgerichtet sind. Durch diese Ausgestaltung können zwei (zweite) Lötanschlussflächen 7 eines brückenförmigen Kontaktelements 14 mit einem dazwischenliegenden Aufbau (hier ein Standard-Steckanschlusselement) gleichzeitig erwärmt und verlötet werden. Die Breite B beträgt hier beispielsweise 6 mm, die Länge L = 20 mm und der Abstand A = 16 mm.

Es versteht sich, dass die Induktionsschleife 13I auch aus einem metallenen Vollprofil bestehen kann, insbesondere wenn die Induktionsspannung nur kurzzeitig oder gepulst angelegt wird und daher auf eine Kühlung verzichtet werden kann.

Es versteht sich weiterhin, dass alle hier beispielhaft gezeigten Induktionsschleifen 13I Metallprofile und insbesondere Hohlprofile mit beliebigen Querschnitten aufweisen können, beispielsweise kreisförmigen, ovalen, rechteckigen, quadratischen oder dreieckigen Querschnitten.

Es versteht sich weiterhin, dass alle hier dargestellten Induktionsschleifen 13I in ihren Abmessungen wie Länge L, Breite B und Krümmungsradius R sowie in ihren Formen an die Gegebenheiten des Einzelfalls angepasst werden können. Die U-Form bzw. Doppel-U-Form mit der erfindungsgemäßen Dimensionierung ist dabei besonders universell und für eine Vielzahl von Anschlusselementen einsetzbar.

### Bezugszeichen

- 1: Scheibe
- 2: Lötstelle
- 3: Leiterstruktur
- 4: Sammelleiter
- 5: Heizleiter,
- 5': Antennenleiter
- 6: erste Lötanschlussfläche
- 7: zweite Lötanschlussfläche
- 9: Lotdepot
- 11: Auflagemittel
- 13: Lötwerkzeug
- 13C: Rohranschlüsse
- 13E: Endbereich, Umkehrbereich
- 13G: Induktionsgenerator
- 13I: Induktionsschleife
- 13P: Schenkel
- 13S: Schalter
- 13U: U-förmiger Bereich
- 13V: Verbindungsbereich
- 13Z: Zuleitungsbereich
- 14: Kontaktelement
- 17: Luftspalt
- 18: Gegenhalter
- 19: elektrische Zuleitung
- 20: Heizung
- 100: Vorrichtung
- A: Abstand
- B: Breite
- L: Länge
- Di, Di1, Di2: Innendurchmesser
- Da, Da1, Da2: Außendurchmesser
- R, R1: Radius
- X-X', Y-Y': Schnittlinie
- Z: Bereich

## Patentansprüche

1. Verfahren zum induktiven Verlöten mindestens eines ferromagnetischen Kontaktelements (14) mit mindestens einer Leiterstruktur (3) auf einer nichtmetallischen Scheibe (1), bei welchem
- eine nichtmetallische Scheibe (1) mit mindestens einer darauf angeordneten Leiterstruktur (3) und mindestens einer ersten Lötanschlussfläche (6) bereitgestellt wird,
- mindestens ein Kontaktelement (14) aus einem ferromagnetischen nichtrostenden Stahl mit mindestens einer zweiten Lötanschlussfläche (7) bereitgestellt wird,
- mindestens ein Lotdepot (9) zumindest abschnittsweise auf der ersten Lötanschlussfläche (6) oder der zweiten Lötanschlussfläche (7) oder auf beiden angeordnet wird,
- die zweite Lötanschlussfläche (7) auf der ersten Lötanschlussfläche (6) angeordnet wird, wobei das Lotdepot (9) zumindest abschnittsweise zwischen der ersten Lötanschlussfläche (6) und der zweiten Lötanschlussfläche (7) angeordnet wird,
- ein Magnetfeld mit einer vorgegebenen Frequenz von einem eine elektrisch gespeiste Induktionsschleife (13I) umfassenden Lötwerkzeug (13) in das Kontaktelement (14) abgestrahlt wird, um dieses durch Induktion zu erhitzen und das daran anliegende Lotdepot (9) aufzuschmelzen,
wobei das
Lötwerkzeug (13) zum induktiven Löten, umfasst
- eine Induktionsschleife (13I) und
- einen Induktionsgenerator (G), der mit der Induktionsschleife (13I) elektrisch leitend verbunden ist,
wobei die Induktionsschleife (13I)
- aus einem Metallprofil besteht,
- mindestens einen U-förmigen Bereich (13U) oder zwei U-förmige Bereiche (13U) aufweist, und jeder U-förmige Bereich (13U) jeweils zwei Schenkel (13P) und einen die Schenkel (13P) verbindenden, abgerundeten Endbereich (13E) aufweist,
- der mindestens eine U-förmige Bereich (13U) eine Länge L von mindestens 3 mm und bevorzugt bis 500 mm, und eine Breite B von 2 mm bis 30 mm, bevorzugt von 4 mm bis 25 mm aufweist,
wobei der abgerundete Endbereich (13E) als Lötspitze der Induktionsschleife (13) dient, und wobei der abgerundete Endbereich (13E) der Induktionsschleife (13I) unmittelbar, über eine elektrisch isolierende Zwischenlage oder mit einem engen Luftspalt (17) auf der der zweiten Lötanschlussfläche (7) abgewandten Seite des Kontaktelements (14) an das Kontaktelement (14) angelegt wird, so dass der kleinste Abstand zwischen der Induktionsschleife (13I) und
dem Kontaktelement (14) im abgerundeten Endbereich (13E) der Induktionsschleife (13I) vorliegt.

2. Verfahren nach Anspruch 1, bei welchem das Magnetfeld entfernt wird, worauf das Kontaktelement (14) und das Lot abkühlen und sich das Lot verfestigt.

3. Verfahren nach Anspruch 1, bei welchem die erste Lötanschlussfläche (6) der Leiterstruktur (3) auf der Scheibe (1) oder die zweite Lötanschlussfläche (7) des Kontaktelements (14) oder beide mit einem bleihaltigen oder bleifreien Lotdepot (9), bevorzugt mit integriertem oder nachträglich appliziertem Flussmittel versehen werden.

4. Verfahren nach einem der Ansprüche 1 bis 3, bei welchem die Frequenz des Magnetfeldes im Bereich von 5 kHz bis 1100 kHz, bevorzugt von 40 kHz bis 1100 kHz, besonders bevorzugt von 400 kHz bis 1100 kHz und insbesondere von 700 kHz und 1100 kHz, liegt.

5. Verfahren nach einem der Ansprüche 1 bis 4, bei welchem eine einstellbare Ausgangsleistung des Induktionsgenerators (G) im Bereich von 200 W bis 15 kW und bevorzugt von 400 W bis 3 kW eingestellt wird.

6. Verfahren nach einem der Ansprüche 1 bis 5, bei welchem das Kontaktelement (14) vor und während des Verlötens mithilfe von nichtferromagnetischen, bevorzugt von nichtferromagnetischen nichtmetallischen Gegenhaltern auf der Scheibe fixiert wird.

7. Verfahren nach einem der Ansprüche 1 bis 6, bei welchem das Kontaktelement (14) und das mindestens eine Lötwerkzeug (13) zumindest während des Lötvorgangs stationär in einer Vorrichtung fixiert werden.

8. Verfahren nach einem der Ansprüche 1 bis 7, bei welchem die Scheibe (1) von der dem Lötwerkzeug (13) abgewandten Seite zusätzlich erwärmt wird.

9. Verfahren nach einem der Ansprüche 1 bis 8, bei welchem der Endbereich (13E) des Lötwerkzeugs (13) halbkreisförmig und besonders bevorzugt halbkreisförmig mit einem Radius R von 2 mm bis 20 mm ausgebildet ist.

10. Verfahren nach einem der Ansprüche 1 bis 9, bei welchem der Endbereich (13E) des Lötwerkzeugs (13) einen ersten bogenförmigen Abschnitt, einen geradlinigen Abschnitt und einen zweiten bogenförmigen Abschnitt aufweist und bevorzugt der erste bogenförmige Abschnitt und der zweite bogenförmige Abschnitt einen Krümmungswinkel R1 von 0,5 mm bis 5 mm aufweist.

11. Verfahren nach einem der Ansprüche 1 bis 10, bei welchem die Induktionsschleife (13I) des Lötwerkzeugs (13) in ihrem Wirkungsbereich kein weichmagnetisches Material aufweist.

12. Verfahren nach einem der Ansprüche 1 bis 11, bei welchem die Induktionsschleife (13I) des Lötwerkzeugs (13) Kupfer oder versilbertes Kupfer, Aluminium oder metallische Sintermaterialien enthält oder im Wesentlichen daraus besteht.

13. Verfahren nach einem der Ansprüche 1 bis 12, bei welchem die Induktionsschleife (13I) des Lötwerkzeugs (13) zumindest abschnittsweise eine nichtmagnetische Einhausung und bevorzugt eine nicht-weichmagnetische Einhausung aufweist, besonders bevorzugt aus einem thermisch beständigen Kunststoff oder einer Keramik.

14. Verfahren nach einem der Ansprüche 1 bis 13, bei welchem die Induktionsschleife (13I) des Lötwerkzeugs (13) ein Hohlprofil ist und bevorzugt mindestens zwei Rohranschlüsse (13C) aufweist, die mit einem im Inneren der Induktionsschleife (13I) angeordneten Hohlraum verbunden sind.

## Claims

1. Method for inductively soldering at least one ferromagnetic contact element (14) to at least one conductor structure (3) on a nonmetallic plate (1), wherein
- a nonmetallic plate (1) having at least one conductor structure (3) arranged thereon and at least one first solder connection surface (6) is provided,
- at least one contact element (14) made of a ferromagnetic stainless steel and having at least one second solder connection surface (7) is provided,
- at least one solder deposit (9) is arranged, at least in sections, on the first solder connection surface (6) or the second solder connection surface (7) or on both,
- the second solder connection surface (7) is arranged on the first solder connection surface (6), wherein the solder deposit (9) is arranged, at least in sections, between the first solder connection surface (6) and the second solder connection surface (7),
- a magnetic field with a predefined frequency is radiated by a soldering tool (13) containing an electrically supplied induction loop (13I) into the contact element (14), in order to heat it by induction and to melt the solder deposit (9) positioned thereon,
wherein the soldering tool (13) for inductive soldering, comprises
- an induction loop (13I) and
- an induction generator (G) that is electrically conductively connected to the induction loop (131),
wherein the induction loop (13I)
- consists of a metal profiled element,
- has at least one U-shaped region (13U) or two U-shaped regions (13U), and each U-shaped region (13U) has in each case two legs (13P) and a rounded end region (13E) connecting the legs (13P),
- the at least one U-shaped region (13U) has a length L of at least 3 mm and preferably to 500 mm, and a width B of 2 mm to 30 mm, preferably of 4 mm to 25 mm,
wherein the rounded end region (13E) serves as the soldering tip of the induction loop (13I), wherein the rounded end region (13E) of the induction loop (13I) is applied to the contact element (14) on the side of the contact element (14) facing away from the second solder connection surface (7) directly or via an electrically insulating intermediate layer or with a narrow air gap, so that the smallest distance between the induction loop (13I) and the contact element (14) is in the end region (13E) of the induction loop (13I).

2. Method according to claim 1, wherein the magnetic field is removed, whereupon the contact element (14) and the solder cool down and the solder solidifies.

3. Method according to claim 1, wherein the first solder connection surface (6) of the conductor structure (3) on the plate (1) or the second solder connection surface (7) of the contact element (14) or both are provided with a lead-containing or lead-free solder deposit (9), preferably with an integrated or subsequently applied flux.

4. Method according to any one of claims 1 through 3, wherein the frequency of the magnetic field is in the range from 5 kHz to 1100 kHz, preferably from 40 kHz to 1100 kHz, particularly preferably from 400 kHz to 1100 kHz, and in particular from 700 kHz to 1100 kHz.

5. Method according to any one of claims 1 through 4, wherein an adjustable output power of the induction generator (G) is set in the range from 200 W to 15 kW and preferably from 400 W to 3 kW.

6. Method according to any one of claims 1 through 5, wherein the contact element (14) is fixed on the plate before and during the soldering using non-ferromagnetic, preferably non-ferromagnetic, nonmetallic counter-holders.

7. Method according to any one of claims 1 through 6, wherein the contact element (14) and the at least one soldering tool (13) are stationarily fixed in a device at least during the soldering operation.

8. Method according to any one of claims 1 through 7, wherein the plate (1) is additionally heated from the side facing away from the soldering tool (13).

9. Method according to any one of claims 1 through 8, wherein the end region (13E) of the soldering tool (13) is semicircular and particularly preferably semicircular with a radius R of 2 mm to 20 mm.

10. Method according to any one of claims 1 through 9, wherein the end region (13E) of the soldering tool (13) has a first arcuate section, a rectilinear section, and a second arcuate section, and preferably, the first arcuate section and the second arcuate section have a curvature angle R1 of 0.5 mm to 5 mm.

11. Method according to any one of claims 1 through 9, wherein the induction loop (13I) of the soldering tool (13) has no soft magnetic material in its active area.

12. Method according to any one of claims 1 through 11, wherein the induction loop (13I) of the soldering tool (13) contains or is substantially made of copper or silver-plated copper, aluminum, or metallic sintered materials.

13. Method according to any one of claims 1 through 12, wherein the induction loop (13I) of the soldering tool (13) has, at least in sections, a non-magnetic enclosure and preferably a non-soft-magnetic enclosure, particularly preferably made of a thermally resistant plastic or a ceramic.

14. Method according to any one of claims 1 through 13, wherein the induction loop (13I) of the soldering tool (13) is a hollow profiled element and preferably has at least two tube connections (13C) that are connected to a hollow space arranged in the interior of the induction loop (131).

## Revendications

1. Procédé pour souder par induction au moins un élément de contact ferromagnétique (14) à au moins une structure conductrice (3) sur une plaque non métallique (1), dans lequel
- une plaque non métallique (1) sur laquelle est disposée au moins une structure conductrice (3) et au moins une première surface de connexion par soudure (6),
- au moins un élément de contact (14) en acier inoxydable ferromagnétique et comportant au moins une deuxième surface de connexion par soudure (7),
- au moins un dépôt de soudure (9) est disposé, au moins en sections, sur la première surface de connexion par soudure (6) ou sur la seconde surface de connexion par soudure (7) ou sur les deux,
- la deuxième surface de connexion par soudure (7) est disposée sur la première surface de connexion par soudure (6), dans laquelle le dépôt de soudure (9) est disposé, au moins par sections, entre la première surface de connexion par soudure (6) et la deuxième surface de connexion par soudure (7),
- un champ magnétique d'une fréquence prédéfinie est rayonné par un outil de soudage (13) contenant une boucle d'induction alimentée électriquement (13I) dans l'élément de contact (14), afin de le chauffer par induction et de faire fondre le dépôt de soudure (9) positionné sur celui-ci,
dans lequel l'outil de soudage (13) pour le soudage par induction comprend
- une boucle d'induction (13I) et
- un générateur d'induction (G) connecté électriquement à la boucle d'induction (13I), dans lequel la boucle d'induction (13I)
- est constituée d'un élément métallique profilé
- possède au moins une région en forme de U (13U) ou deux régions en forme de U (13U), et chaque région en forme de U (13U) possède dans chaque cas deux pattes (13P) et une région d'extrémité arrondie (13E) reliant les pattes (13P),
- l'au moins une région en forme de U (13U) a une longueur L d'au moins 3 mm et de préférence jusqu'à 500 mm, et une largeur B de 2 mm à 30 mm, de préférence de 4 mm à 25 mm,
dans laquelle la région d'extrémité arrondie (13E) sert de pointe de soudure pour la boucle d'induction (13I),
dans laquelle la zone d'extrémité arrondie (13E) de la boucle d'induction (131) est appliquée à l'élément de contact (14) du côté de l'élément de contact (14) opposé à la deuxième surface de connexion par soudure (7), directement ou par l'intermédiaire d'une couche intermédiaire électriquement isolante ou avec un espace d'air étroit, de sorte que la plus petite distance entre la boucle d'induction (13I) et l'élément de contact (14) se trouve dans la zone d'extrémité (13E) de la boucle d'induction (13I).

2. Procédé selon la revendication 1, dans lequel le champ magnétique est supprimé, après quoi l'élément de contact (14) et la soudure se refroidissent et la soudure se solidifie.

3. Procédé selon la revendication 1, dans lequel la première surface de connexion par soudure (6) de la structure conductrice (3) sur la plaque (1) ou la deuxième surface de connexion par soudure (7) de l'élément de contact (14) ou les deux sont pourvues d'un dépôt de soudure (9) contenant ou non du plomb, de préférence avec un flux intégré ou appliqué ultérieurement.

4. Procédé selon l'une quelconque des revendications 1 à 3, dans lequel la fréquence du champ magnétique est comprise entre 5 kHz et 1100 kHz, de préférence entre 40 kHz et 1100 kHz, de préférence entre 400 kHz et 1100 kHz, et en particulier entre 700 kHz et 1100 kHz.

5. Procédé selon l'une quelconque des revendications 1 à 4, dans lequel une puissance de sortie réglable du générateur d'induction (G) est réglée dans une plage allant de 200 W à 15 kW et, de préférence, de 400 W à 3 kW.

6. Procédé selon l'une quelconque des revendications 1 à 5, dans lequel l'élément de contact (14) est fixé sur la plaque avant et pendant la soudure à l'aide de contre-portes non ferromagnétiques, de préférence non ferromagnétiques et non métalliques.

7. Procédé selon l'une quelconque des revendications 1 à 6, dans lequel l'élément de contact (14) et au moins un outil de soudage (13) sont fixés de manière stationnaire dans un dispositif au moins pendant l'opération de soudage.

8. Procédé selon l'une quelconque des revendications 1 à 7, dans lequel la plaque (1) est chauffée en plus du côté opposé à l'outil de soudage (13).

9. Procédé selon l'une des revendications 1 à 8, dans lequel la zone d'extrémité (13E) de l'outil de soudage (13) est semi-circulaire et, de préférence, semi-circulaire avec un rayon R de 2 mm à 20 mm.

10. Procédé selon l'une quelconque des revendications 1 à 9, dans lequel la zone d'extrémité (13E) de l'outil de soudage (13) présente une première section arquée, une section rectiligne et une seconde section arquée, et de préférence, la première section arquée et la seconde section arquée présentent un angle de courbure R1 compris entre 0,5 mm et 5 mm.

11. Procédé selon l'une des revendications 1 à 9, dans lequel la boucle d'induction (13I) de l'outil de soudage (13) n'a pas de matériau magnétique doux dans sa zone active.

12. Procédé selon l'une des revendications 1 à 11, dans laquelle la boucle d'induction (13I) de l'outil de soudage (13) contient ou est essentiellement constituée de cuivre ou de cuivre argenté, d'aluminium ou de matériaux métalliques frittés.

13. Procédé selon l'une quelconque des revendications 1 à 12, dans lequel la boucle d'induction (13I) de l'outil de soudage (13) comporte, au moins en partie, un boîtier non magnétique et de préférence un boîtier non magnétique mou, de préférence en plastique thermorésistant ou en céramique.

14. Procédé selon l'une quelconque des revendications 1 à 13, dans lequel la boucle d'induction (13I) de l'outil de soudage (13) est un élément profilé creux et comporte de préférence au moins deux connexions tubulaires (13C) qui sont reliées à un espace creux situé à l'intérieur de la boucle d'induction (131).
